(19) Europäisches Patentamt / European Patent Office / Office européen des brevets

(11) **EP 4 765 013 A1**

(12) **EUROPEAN PATENT APPLICATION**

(43) Date of publication:
24.06.2026 Bulletin 2026/26

(51) International Patent Classification (IPC):
*G06T 5/50* (2006.01)

(21) Application number: 25224638.4

(22) Date of filing: 17.12.2025

(52) Cooperative Patent Classification (CPC):
**G06T 5/50; G06T 5/60;** G06T 2207/10024;
G06T 2207/10036; G06T 2207/20021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 18.12.2024 CN 202411875366

(71) Applicant: **GUANGDONG OPPO MOBILE TELECOMMUNICATIONS CORP., LTD.**
**Dongguan, Guangdong 523860 (CN)**

(72) Inventor: **TANG, Cheng**
**Dongguan, Guangdon 523860 (CN)**

(74) Representative: **Grassi, Stefano**
**Bugnion S.p.A.**
**Viale Lancetti, 17**
**20158 Milano (IT)**

(54) **IMAGE PROCESSING METHOD, ELECTRONIC DEVICE, AND COMPUTER STORAGE MEDIUM**

(57) An image processing method is provided according to embodiments of the disclosure. The method includes: acquiring a multispectral image and an original captured image of a captured scene; determining chromaticity coordinate values of the multispectral image in a chromaticity coordinate system; and obtaining a processed image by performing correction processing on the original captured image, based on the chromaticity coordinate values of the multispectral image and correspondences between image blocks of the multispectral image and image blocks of the original captured image. The embodiments of the disclosure further provide an image processing apparatus, an electronic device, and a computer storage medium.

**Description**

TECHNICAL FIELD

The disclosure relates to the field of image processing technologies, and particularly to an image processing method, an electronic device and a computer storage medium.

BACKGROUND

Currently, light sensitivity of a camera's imaging sensor is different from that of human eye, which may lead to an inconsistency between original color information of an image captured by the camera and color information actually seen by human eye.
In order to make the image captured by the camera as consistent as possible with the color information actually seen by human eye, in the related art, color correction is used to make a reproduced image as consistent as possible with the color information actually seen by human eye. However, there is still a significant color deviation between the color information of the image obtained by the color correction method and the color information actually seen by human eye.

SUMMARY

Embodiments of the disclosure provide an image processing method, an electronic device, and a readable storage medium, by which the color of a processed image is made close to the color information actually seen by human eye. The invention is set out in the appended set of claims.
The embodiments of the disclosure provide the image processing method and apparatus, the electronic device, and the computer storage medium. In the method, the multispectral image and the original captured image of the captured scene are acquired; the chromaticity coordinate values of the multispectral image in the chromaticity coordinate system are determined; and the processed image is obtained by performing correction processing on the original captured image, based on the chromaticity coordinate values of the multispectral image and the correspondences between the image blocks of the multispectral image and the image blocks of the original captured image. In other words, in the embodiments of the disclosure, after acquiring the multispectral image and the original captured image of the captured scene and determining the chromaticity coordinate values of the multispectral image, the original captured image can be corrected, based on the chromaticity coordinate values of the multispectral image and the correspondences between the image blocks of the multispectral image and the image blocks of the original captured image, thereby obtaining the processed image. As such, color gamut of the processed image is expanded, and a color deviation between the image captured by a camera and the real scene perceived by human eye is corrected. This makes overall color perception of the captured image match human vision, thereby enhancing user experience.

BRIEF DESCRIPTION OF THE DRAWINGS

FIG. 1 is a flowchart of an image processing method according to the embodiments of the disclosure.
FIG. 2 is a schematic diagram illustrating an example of different color spaces in a chromaticity coordinate system according to the embodiments of the disclosure
FIG. 3 is a flowchart of an example of the image processing method according to the embodiments of the disclosure.
FIG. 4a is a schematic diagram illustrating an example of an image in a real scene according to the embodiments of the disclosure.
FIG. 4b is a schematic diagram illustrating an example of an original captured image according to the embodiments of the disclosure.
FIG. 4c is a schematic diagram illustrating an example of a processed image according to the embodiments of the disclosure.
FIG. 5 is a schematic structural diagram of an image processing apparatus according to the embodiments of the disclosure.
FIG. 6 is a schematic structural diagram of an electronic device according to the embodiments of the disclosure.

DETAILED DESCRIPTION OF PREFERRED EMBODIMENTS

The technical solutions in the embodiments of the disclosure will be described clearly and comprehensively with reference to the drawings in the embodiments of the disclosure.
Currently, there is no mass-produced solution that directly utilizes a multispectral camera for color reproduction on the mobile phone side. From the perspective of spectrum-related technologies released within the industry, the primary approaches are as follows: 1. using specific wavelength bands to realize specific applications, such as infrared fog penetration, ultraviolet sun protection detection, and spectral skin detection; 2. performing ambient color temperature detection based on the spectrum, to assist an auto white balance (AWB) algorithm for color reproduction; 3. using additional non-visible light bands to increase sensor sensitivity, thereby improving low-light performance; and 4. directly converting multispectral multi-dimensional Raw into RGB color space via a matrix transformation to improve color accuracy.
However, none of the above approaches can be directly applied to color reproduction. Constrained by an original color space, the above approaches fail to take full advantage of the spectral camera's precision and breadth in color gamut.

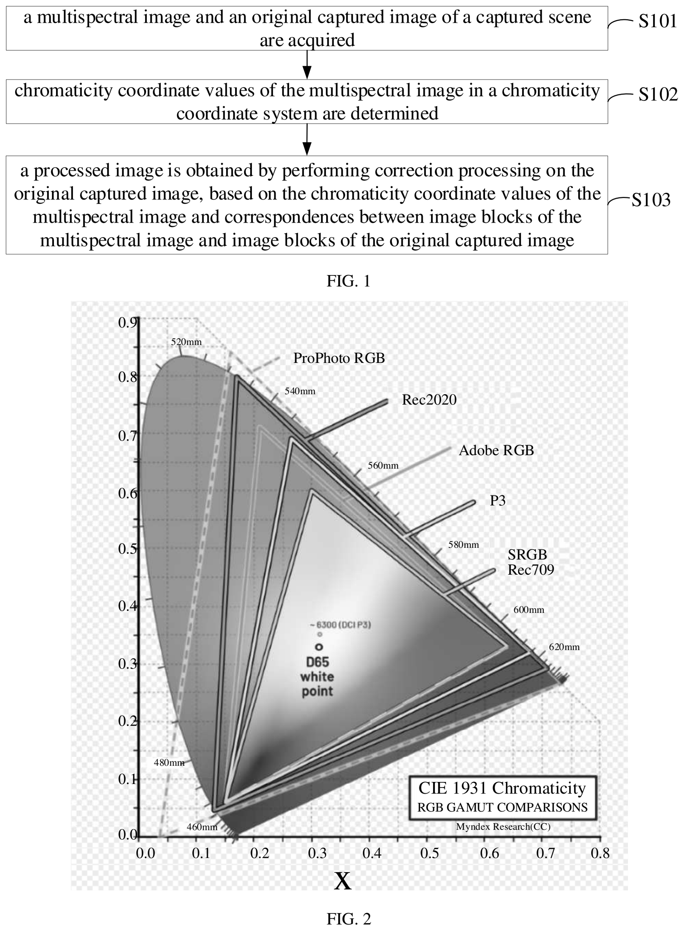

In view of the technical problem of a large color deviation between the color information of the captured image and the color information actually seen by human eye, the embodiments of the disclosure provide an image processing method. FIG. 1 is an exemplary flowchart of the image processing method according to the embodiments of the disclosure. As illustrated in FIG. 1, the image processing method may include S101, S102 and S103.

At S101, a multispectral image and an original captured image of a captured scene are acquired.

The image processing method provided by the embodiment of the disclosure may be implemented by an electronic device, for example, a mobile phone. The electronic device may acquire the multispectral image and the original captured image of the captured scene. The multispectral image provides rich spectral information. For example, the original captured image may be a RAW image.

Specifically, the electronic device may acquire the multispectral image and the original captured image of the captured scene from other electronic devices, or acquire them through a multispectral camera and an ordinary camera on the electronic device, which is not limited in the embodiments of the disclosure.

It is notable that the multispectral camera can simultaneously receive and record information radiated or reflected by a target on different narrow spectra. The multispectral camera splits an incident full-band or wideband optical signal into multiple narrow-band light beams, and images each narrow-band light beam on a respective detector, thereby obtaining images of different spectral bands.

A wide spectrum typically means that radiation of a light source covers a wide wavelength range. Such light source may radiate at multiple bands from ultraviolet (UV) to visible light (VIS) and to near-infrared (NIR). A narrow spectrum means that radiation of a light source whose is concentrated within a specific wavelength range. The radiation range of such light source is relatively narrow, usually covering only light of a specific wavelength or a narrow continuous wavelength range. A wavelength range of the narrow spectrum may range from a few nanometers to hundreds of nanometers, which may be contingent on the type and design of the light source.

In addition, the original captured image may be captured by an RGB camera. In this way, the multispectral image and the original captured image for the same captured scene may be acquired.

At S102, chromaticity coordinate values of the multispectral image in a chromaticity coordinate system are determined.

After the multispectral image and the original captured image for the same captured scene are acquired at S101, the chromaticity coordinate values of the multispectral image in the chromaticity coordinate system are determined at S102.

After the multispectral image is acquired, a spectral distribution of the light source may be determined. The chromaticity coordinate values of the multispectral image in the chromaticity coordinate system may be determined based on the spectral distribution.

Specifically, the chromaticity coordinate values of each image block of the multispectral image in the chromaticity coordinate system may be calculated based on the spectral distribution; alternatively, a preset AI model may be used to obtain the chromaticity coordinate values of each image block of the multispectral image in the chromaticity coordinate system, which is not limited in the embodiments of the disclosure.

Regarding the chromaticity coordinates, a chromaticity coordinate is generally represented using two coordinate values, x and y, which represent a position of a color within a visible spectrum. In colorimetry, any color (C) may be expressed as a mixture of three primary colors: red (X), green (Y), and blue (Z), which may be expressed by a following formula:

$$(C)=X(X)+Y(Y)+Z(Z) \qquad (1)$$

The chromaticity coordinate values x, y, z may be expressed as a ratio of spectral tristimulus value X, Y, or Z of a respective primary color to the sum of the three values, which may be expressed by following formulas:

$$x=(X)/(X+Y+Z) \qquad (2)$$

$$y=(Y)/(X+Y+Z) \qquad (3)$$

$$z=(Z)/(X+Y+Z) \qquad (4)$$

Since the sum of x, y, and z equals 1, a color is generally expressed as (x, y).

In this way, after the multispectral image is acquired, the chromaticity coordinate values of the multispectral image in the chromaticity coordinate system may be determined.

At S3, a processed image is obtained by performing correction processing on the original captured image, based on the chromaticity coordinate values of the multispectral image in the chromaticity coordinate system and correspondences between image blocks of the multispectral image and image blocks of the original captured image.

After the chromaticity coordinate values of the multispectral image in the chromaticity coordinate system are determined at S102, since there are correspondences between the image blocks of the multispectral image and the image blocks of the original imaging image, based on the correspondences, the original captured image may be corrected according to the chromaticity coordinate values of the multispectral image in the chromaticity coordinate system, thereby obtaining the processed image.

Specifically, all or part of the chromaticity coordinate values may be used to replace pixel values of image blocks of the original captured image corresponding to the image blocks of the multispectral image. Alternatively, the chromaticity coordinate values in the chromaticity coordinate system may be used to correct chromaticity values of image blocks of the original captured image corresponding to the image blocks of the multispectral image. Apparently, other methods may also be used to correct the original captured image based on the chromaticity coordinate values of the multispectral image in the chromaticity coordinate system to obtain the processed image, which is not limited in the embodiments of the disclosure.

As such, a color gamut of the processed image is expanded, and a color deviation between the image captured by the camera and the real scene perceived by human eye is corrected, so that an overall color perception of the captured image matches the human vision, thereby improving the user experience.

Regarding determining the chromaticity coordinate values of the multispectral image in the chromaticity coordinate system, in some alternative embodiments, S102 may include:

> obtaining spectral information from the multispectral image;
> obtaining a spectral distribution of the multispectral image by performing statistical analysis on the spectral information; and
> determining, based on the spectral distribution of the multispectral image, the chromaticity coordinate values of the multispectral image in the chromaticity coordinate system.

It can be understood that, after the multispectral image is acquired, the spectral distribution of the light source may be determined. Specifically, radiometric correction may be first performed on the multispectral image to reduce errors caused by factors such as sensor response, atmospheric absorption, and scattering. The radiometric correction may be carried out by using a gray board with known reflectance values or pre-determined calibration coefficients. Then, the image is cropped based on a boundary of a research area or a region of interest. The cropped image is segmented into cells (small areas) or plots, so as to extract spectral information of each cell separately. The extracted spectral information includes a reflectivity or radiation intensity of each pixel on different spectral channels. Statistical analysis is performed on the extracted spectral information to obtain spectral distribution characteristics of each cell. Statistical such as mean value, standard deviation, maximum value, and minimum value of the spectral distribution may be calculated. In addition, spectral distribution curves or spectral distribution diagrams may be used to visually illustrate the spectral distribution characteristics of different cells.

Specifically, the spectral distribution includes radiation intensity values $P(\lambda)$ corresponding to multiple wavelengths $(\lambda)$. After knowing $P(\lambda)$, the chromaticity coordinate values of the multispectral image in the chromaticity coordinate system may be determined.

The chromaticity coordinate values of the multispectral image in the chromaticity coordinate system may be calculated on the basis of knowing $P(\lambda)$, or via a model. Apparently, the chromaticity coordinate values of the multispectral image in the chromaticity coordinate system may also be obtained in other manners, which is not specifically limited in the embodiments of the disclosure.

In this way, the chromaticity coordinate values of the multispectral image in the chromaticity coordinate system may be obtained based on the spectral distribution of the multispectral image, which provides data for expanding the color gamut of the original captured image.

In order to obtain the chromaticity coordinate values of the multispectral image in the chromaticity coordinate system, in some alternative embodiments, the operation of determining, based on the spectral distribution of the multispectral image, the chromaticity coordinate values of the multispectral image in the chromaticity coordinate system may include:

> determining tristimulus values, based on the spectral distribution of the multispectral image and standard chromaticity functions; and
> determining, based on the tristimulus values, the chromaticity coordinate values of the multispectral image in the chromaticity coordinate system.

It may be understood that, the spectral distribution of the spectral image is $P(\lambda)$ and the standard chromaticity functions are $X(\lambda)$, $Y(\lambda)$, $Z(\lambda)$ specified by the International Commission on Illumination (CIE), which may usually be obtained from colorimetry books or related databases.

Regarding determining the tristimulus values based on the spectral distribution of the multispectral image and the standard chromaticity functions, the tristimulus values X, Y, Z are calculated using following calculation formulas:

$$X=\sum P(\lambda)\times X(\lambda) \qquad (5)$$

$$Y=\sum P(\lambda)\times Y(\lambda) \qquad (6)$$

$$Z=\sum P(\lambda)\times Z(\lambda) \qquad (7)$$

where Σ represents summing all values within the wavelength range.

Based on the tristimulus values X, Y, Z, the chromaticity coordinate values x, y are calculated using following formulas:

$$x=X/(X+Y+Z) \qquad (8)$$

$$y=Y/(X+Y+Z) \qquad (9)$$

In this way, the chromaticity coordinate values of the multispectral image in the chromaticity coordinate system may be determined based on the spectral distribution of the multispectral image, which makes the determined chromaticity coordinate values of the multispectral images in the chromaticity coordinate system more accurate, thereby providing reliable data for expanding the color gamut of the original captured image.

In addition, regarding obtaining the chromaticity coordinate values of the multispectral image in the chromaticity coordinate system, in some alternative embodiments, the operation of determining, based on the spectral distribution of the multispectral image, the chromaticity coordinate values of the multispectral image in the chromaticity coordinate system may include:
inputting the spectral distribution of the multispectral image into a preset artificial intelligence (AI) model, and outputting, from the AI model, the chromaticity coordinate values of the multispectral image in the chromaticity coordinate system.

It can be understood that, after the spectral distribution of the multispectral image is obtained, the spectral distribution is input into the preset AI model, and the AI model outputs the chromaticity coordinate values of the multispectral image in the chromaticity coordinate system.

The preset AI model is constructed and trained in advance. First, data collection and data processing are performed. Specifically, since the construction of the AI model starts with data collection, the quality, quantity, and diversity of data are crucial to the performance of the AI model. The data processing includes data cleaning, formatting, feature selection, and other steps to ensure that the data is suitable for model training.

Then, model selection and design are performed. An appropriate model architecture is selected according to the nature of the task and the characteristics of the data. For example, for image classification tasks, a convolutional neural network (CNN) may be selected; and for natural language processing tasks, a recurrent neural network (RNN) or Transformer architecture may be selected.

Next, model training is performed. Specifically, the model is trained with the processed data. The training process includes forward propagation, loss calculation, back propagation, parameter update, etc. Through multiple iterations, the model gradually learns the inherent laws and features of the data.

Finally, model evaluation and optimization are performed. Specifically, after training, the model needs to be evaluated to measure its performance. Evaluation indicators may include accuracy, recall rate, F1 score, etc. Based on the evaluation results, the model may be optimized, such as adjusting hyperparameters, and adding regularization terms. In this way, the AI model is obtained.

As such, the chromaticity coordinate values of the multispectral image in the chromaticity coordinate system are determined by using the preset AI model, which makes the determined chromaticity coordinate values of the multispectral image in the chromaticity coordinate system more accurate, thereby providing reliable data for expanding the color gamut of the original captured image.

To further improve the accuracy for determining the chromaticity coordinate values of the multispectral image in the chromaticity coordinate system, in some alternative embodiments, the above method may further include:
correcting, using a preset color correction matrix, spectral information in the spectral distribution of the multispectral image to obtain a corrected spectral distribution of the multispectral image, and determining the corrected spectral distribution of the multispectral image as the spectral distribution of the multispectral image.

It may be understood that, after the multispectral image is acquired, it is necessary to perform color correction on the spectral information in the spectral distribution of the multispectral image. The color correction for the spectral information in the spectral distribution of the multispectral image may be performed using a color correction matrix (CCM), thereby correcting the value of each channel in the multispectral image.

Specifically, the color correction matrix may be generated by some software, or calculated based on statistical manners, or obtained by using open-source libraries or tools, which is not specifically limited in the embodiments of the disclosure.

In this way, by performing color correction on the spectral information in the multispectral image, the corrected spectral distribution of the multispectral image can reflect real color better, which is conducive to correcting the color deviation between the image captured by the camera and the real scene perceived by human eye.

In order to determine the correspondences between the image blocks of the multispectral image and the image blocks of the original captured image, in some alternative embodiments, the above method may further include:

determining, based on a spatial position relationship between a first camera and a second camera, correspondences between image blocks of an image obtained by the first camera and image blocks of an image obtained by the second camera; and

determining, based on the correspondences between the image blocks of the image obtained by the first camera and the image blocks of the image obtained by the second camera, image blocks of the original captured image corresponding to the image blocks of the multispectral image, thereby obtaining the correspondences between the image blocks of the multispectral image and the image blocks of the original captured image.

It can be understood that the spatial position relationship between the first camera and the second camera is necessary to determine the correspondences between the image blocks of the multispectral image and the image blocks of the original captured image. Specifically, the first camera is used to capture the multispectral image, and the second camera is used to capture the original captured image.

That is to say, the correspondences between the image blocks of the image obtained by the first camera and the image blocks of the image obtained by the second camera may be determined based on the spatial position relationship between the first camera and the second camera. After the spatial position relationship between the first camera and the second camera on the mobile phone is obtained, the correspondences between the image blocks of the images obtained by the two cameras may be determined. For example, in a case where the image blocks of the image obtained by the first camera are $128 \times 256$, and the image blocks of the image obtained by the second camera are $128 \times 256$, the image block of $1 \times 2$ of the first camera corresponds to the image block of $1 \times 1$ of the second camera, and the image block of $1 \times 3$ of the first camera corresponds to the image block of $1 \times 3$ of the second camera. By analogy, the correspondences between the image blocks of the image obtained by the first camera and the image blocks of the image obtained by the second camera may be determined.

Based on the above correspondences, image blocks of the original captured image corresponding to the image blocks of the multispectral image may be found, so that the correspondences between the image blocks of the multispectral image and the image blocks of the original captured image may be obtained.

Regarding the correspondences between the image blocks of the multispectral image and the image blocks of the original captured image, a part of the image blocks of the multispectral image may correspond to a part of the image blocks of the original captured image, or a part of the image blocks of the multispectral image may correspond to all the image blocks of the original captured image, which is not limited in the embodiments of the disclosure.

In this way, once the correspondences between the image blocks of the multispectral image and the image blocks of the original captured image are determined, it may determine which image block in the multispectral image and which image block in the original captured image are images of a same portion of the target object, which is conducive to correcting the original captured image more accurately.

To process the original captured image based on the above correspondences, in some alternative embodiments, S 103 may include:

obtaining a replaced original captured image by replacing pixel values of image blocks of the original captured image with the chromaticity coordinate values of image blocks of the multispectral image corresponding to the image blocks of the original captured image, based on the correspondences between the image blocks of the multispectral image and the image blocks of the original captured image; and

determining the replaced original captured image as the processed image.

It may be understood that, after knowing the correspondences between the image blocks of the multispectral image and the image blocks of the original captured image, it is possible to know which image block in the multispectral image corresponds to which image block in the original captured image. In this way, the pixel values of the image blocks of the original captured image may be replaced with the chromaticity coordinate values of the corresponding image blocks of the multispectral image corresponding to the image blocks of the original captured image, thereby obtaining the replaced original captured image as the processed image.

It is notable that the operation of replacing the pixel values of image blocks of the original captured image with the chromaticity coordinate values of image blocks of the multispectral image corresponding to the image blocks of the original captured image may include: replacing the pixel values of a part of the image blocks of the original captured image with the chromaticity coordinate values of image blocks of the multispectral image corresponding to the part of the image blocks of the original captured image; or replacing the pixel values of all image blocks of the original captured image with the chromaticity coordinate values of image blocks of the multispectral image respectively corresponding to the all image blocks of the original captured image.

Regarding replacing the pixel values of the part of the image blocks of the original captured image with the chromaticity coordinate values of image blocks of the multispectral image corresponding to the part of the image blocks of the original captured image, the part of the image blocks of the original captured image here may be obtained through selection based on the chromaticity coordinate values of the multispectral image in the chromaticity coordinate system. A preset condition may be set, and only the chromaticity coordinate values that meet the preset condition may be used to replace the pixel values of corresponding image blocks of the original captured image.

In this way, the processed image is obtained by performing replacement based on the correspondences, which expands the color gamut of the processed image, corrects the color deviation between the image taken by the camera and the real scene perceived by human eye, makes the overall color perception of the captured image match human vision, thereby improving the user experience.

In order to further reduce the color deviation between the image taken by the camera and the real scene perceived by human eye, in some alternative embodiments, the above method may further include:

acquiring an initial multispectral image of the captured scene; and
obtaining the multispectral image by performing spectral calibration and/or spectral reproduction on spectral information in a spectral distribution of the initial multispectral image.

It may be understood that, after the initial multispectral image for the captured scene is acquired, the initial multispectral image is preprocessed. The preprocessing may be the spectral calibration on the spectral information in the spectral distribution of the initial multispectral image to obtain the multispectral image, or the spectral reproduction on the spectral information in the spectral distribution of the initial multispectral image to obtain the multispectral image, or both the spectral calibration and the spectral reproduction on the spectral information in the spectral distribution of the initial multispectral image to obtain the multispectral image, which is not specifically limited in the embodiments of the disclosure.

The spectral calibration mainly includes wavelength calibration, intensity calibration, baseline calibration, spectral smoothing, spectral normalization, spectral deconvolution, etc.

Specifically, the spectral reproduction is to reproduce the color information in spectral data (such as a multispectral image, and a hyperspectral image) to colors or color information closer to that perceived by human eye through specific algorithms or technologies. This process usually involves processing, analysis, and conversion of spectral data.

In this way, the preprocessing of the initial multispectral image is realized through the spectral calibration and/or the spectral reproduction, so that the obtained multispectral image may reflect the color information of the target object more accurately, which is conducive to processing the original captured image and further reducing the color deviation between the image captured by the camera and the real scene perceived by human eye.

An example is given below to describe the image processing method described in the above one or more embodiments.

**In** this example, the multi-dimensional color information of the multi-spectral camera is used to perform color mapping in the wide-area color space to realize the color reproduction of the wide color gamut, and in combination with an image processing system of a mobile phone, the color expression of the camera is enhanced based on the spatial relationship between the spectral camera and the conventional camera.

FIG. 2 is an exemplary schematic diagram illustrating different color spaces in the chromaticity coordinate system according to the embodiments of the disclosure. FIG. 2 illustrates a chromaticity coordinate system, in which regional ranges of the chromaticity coordinates of different color space standards are marked. For example, the different color space standards include: ProPhoto RGB, Rec2020, Adobe RGB, P3, sRGB, and Rec709.

ProPhoto RGB has a wide color gamut, which may cover nearly 90% of the colors visible to human eye that are specified by the International Commission on Illumination (CIE), and the color gamut range even includes some colors invisible to human eye.

Rec.2020 has a wide color gamut rage, and may reproduce color spaces that Rec.709 cannot reproduce.

Compared with sRGB, Adobe RGB includes a larger green to red regions, and may provide better color gradation and accuracy. However, the color gamut range of Adobe RGB is also smaller than that of ProPhoto RGB.

DCI-P3 is a wide color gamut standard introduced by the U.S. film industry, also known as P3 color gamut. DCI-P3 covers a large color region, and has wider region of green and red than that of the sRGB standard. DCI-P3 covers about 45.5% of the CIE 1931 color space, which is smaller than that of Rec.2020, but significantly higher than the 35.9% of Rec.709.

sRGB is an international standard of the RGB color space defined by the International Electrotechnical Commission (IEC), which forms the basis of the color space of the Microsoft Windows operating system and is the color space for creating websites. sRGB is widely used and compatible with most standard cameras and printers, but its color gamut range is relatively small.

The color gamut of sRGB and Rec.709 are very close, but the color gamut of sRGB is slightly smaller than that of Rec.709. This means that, in a case where content is displayed in the Rec.709 color space, some colors may be distorted when using an sRGB display, especially in scenes with high brightness and high saturation. Regarding application fields, sRGB is mainly used for computer displays and Internet content, and Rec.709 focuses on high-definition television and digital video production.

As can be seen from FIG. 2, the color space perceivable by human eye is a horseshoe shape formed by spectra of different wavelengths, and the regional range of different color space standards in the chromaticity coordinate system is triangular. It can be seen that, in actual image processing, the color space is defined as a triangular color space due to the RGB&CMY three-primary color model. Therefore, there is a difference in the color gamut between human eye and the camera system.

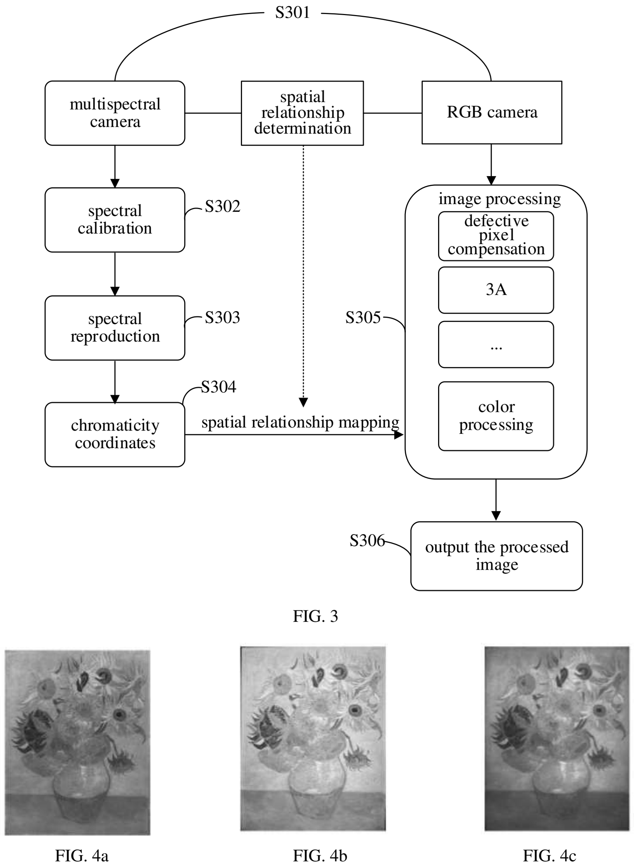

FIG. 3 is an exemplary flowchart of an example of the image processing method according to the embodiments of the disclosure. As illustrated in FIG. 3, the image processing method may include S301 to S306.

At S301, a multispectral image of a captured scene captured by a multispectral camera is acquired, and an RGB image captured by an RGB camera is acquired.

At S302, spectral calibration is performed on the multispectral image to obtain a calibrated multispectral image.

At S303, spectral reproduction is performed on the calibrated multispectral image to obtain a reproduced multispectral image.

At S304, chromaticity coordinate values of the multispectral image in a chromaticity coordinate system are determined based on the reproduced multispectral image.

At S305, color processing is performed on the RGB image based on a spatial relationship between the multispectral camera and the RGB camera, and the chromaticity coordinate values of the multispectral image in the chromaticity coordinate system, thereby obtaining a processed image.

Specifically, in addition to the color processing, the RGB image is also processed with defective pixel compensation processing and 3A processing, where 3A may include three key algorithms: Auto Focus (AF), Auto Exposure (AE), and Auto White Balance (AWB).

At S306, the processed image is output.

As illustrated in FIG. 3, after the multispectral camera performs the spectral calibration and the spectral reproduction, the multispectral camera may perform correction based on a multi-dimensional CCM matrix. The chromaticity coordinate values of the corrected multispectral image in the chromaticity coordinate system may be generated directly by using an AI (Deep learning) model or calculation. After the spatial relationship between the multispectral camera and the RGB camera is determined, based on the spatial relationship, pixel values of image blocks of the original captured image may be replaced with the chromaticity coordinate values of image blocks of the multispectral image corresponding to the image blocks of the original captured image. In this way, more accurate color information captured by the multispectral camera is mapped to the RGB camera system, thereby enabling the camera to achieve more accurate color reproduction.

In the example, the multispectral camera outputs values of 9 channels, and performs the spectral calibration and the spectral reproduction on them to obtain processed values of 9 channels. After color correction based on the values of 9 channels, the chromaticity coordinates may be calculated by means of calculation or an AI model.

After the chromaticity coordinates are obtained, based on the correspondences between the image blocks of the two cameras, the values obtained by the RGB camera are replaced with the chromaticity coordinates of image blocks of the multispectral image corresponding to the image blocks of the RGB image, thereby expanding the color gamut of the RGB camera.

For the spatial relationship, positions of some image blocks obtained by the RGB camera may correspond to positions of some image blocks obtained by the spectral camera, or the positions of all the image block positions obtained by the RGB camera may correspond to the positions of some or all the image blocks obtained by the spectral camera. The positions may be preset to ensure that the positions of all the image blocks obtained by the RGB camera correspond to the positions of all the image blocks of the multispectral image obtained by the spectral camera.

FIG. 4a is a schematic diagram illustrating an example of an image in a real scene according to the embodiments of the disclosure. FIG. 4a illustrates the real scene perceived by human eye. FIG. 4b is a schematic diagram illustrating an example of an original captured image according to the embodiments of the disclosure. FIG. 4b illustrates the original captured image captured by an RGB camera. FIG. 4c is a schematic diagram illustrating an example of a processed image according to the embodiments of the disclosure. FIG. 4c illustrates the processed image obtained by using the embodiment.

In this example, the color processing link design of multispectral camera in assisting in RGB camera is proposed. Moreover, the multispectral camera can achieve accurate color performance of wide color gamut, which assists the color reproduction of the RGB camera system.

In the image processing method according to the embodiments of the disclosure, the multispectral image and the original captured image of the captured scene are acquired; the chromaticity coordinate values of the multispectral image in the chromaticity coordinate system are determined; and the processed image is obtained by performing correction processing on the original captured image, based on the chromaticity coordinate values of the multispectral image in the chromaticity coordinate system and the correspondences between the image blocks of the multispectral image and the image blocks of the original captured image. In other words, in the embodiments of the disclosure, after acquiring the multispectral image and the original captured image of the captured scene and determining the chromaticity coordinate values of the multispectral image in the chromaticity coordinate system, the original captured image can be corrected based on the chromaticity coordinate values of the multispectral image in the chromaticity coordinate system and the correspondences between the image blocks of the multispectral image and the image blocks of the original captured image, thereby obtaining the processed image. As such, color gamut of the processed image is expanded, and a color deviation between the image captured by the camera and the real scene perceived by human eye is corrected. This makes overall color perception of the captured image match human vision, thereby enhancing user experience.

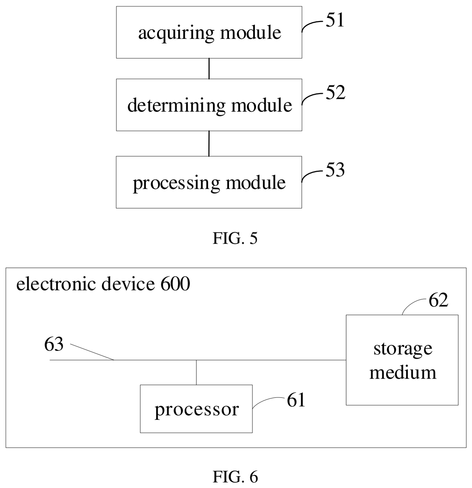

Based on the same inventive concept as the foregoing embodiments, the embodiments of the disclosure provide an image processing apparatus. FIG. 5 is an exemplary schematic structural diagram of the image processing apparatus according to the embodiments of the disclosure. As illustrated in FIG. 5, the image processing device includes an acquiring module 51, a determining module 52, and a processing module 53.

The acquiring module 51 is configured to acquire a multispectral image and an original captured image of a captured scene.

The determining module 52 is configured to determine chromaticity coordinate values of the multispectral image in a chromaticity coordinate system.

The processing module 53 is configured to obtain a processed image by performing correction processing on the original captured image, based on the chromaticity coordinate values of the multispectral image in the chromaticity coordinate system and correspondences between image blocks of the multispectral image and image blocks of the original captured image.

In some alternative embodiments, the determining module 52 is specifically configured to: obtain spectral information from the multispectral image; perform statistical analysis on the spectral information, and obtain a spectral distribution of the multispectral image; and determine, based on the spectral distribution of the multispectral image, the chromaticity coordinate values of the multispectral image in the chromaticity coordinate system.

In some alternative embodiments, when determining, based on the spectral distribution of the multispectral image, the chromaticity coordinate values of the multispectral image in the chromaticity coordinate system, the determining module 52 is specifically configured to: input the spectral distribution of the multispectral image into a preset AI model, and output the coordinate values of the multispectral image in the chromaticity coordinates.

In some alternative embodiments, the apparatus is further configured to: correct, using a preset color correction matrix, spectral information in the spectral distribution of the multispectral image to obtain a corrected spectral distribution of the multispectral image, and determine the corrected spectral distribution of the multispectral image as the spectral distribution of the multispectral image.

In some alternative embodiments, the apparatus is further configured to: determine, based on a spatial position relationship between a first camera and a second camera, correspondences between image blocks of an image obtained by the first camera and image blocks of an image obtained by the second camera; and determine, based on the correspondences between the image blocks of the image obtained by the first camera and the image blocks of the image obtained by the second camera, image blocks of the original captured image corresponding to the image blocks of the multispectral image, thereby obtaining the correspondences between the image blocks of the multispectral image and the image blocks of the original captured image; where the first camera is configured to capture the multispectral image, and the second camera is configured to capture the original captured image.

In some alternative embodiments, the processing module 53 is specifically configured to: obtain a replaced original captured image by replacing pixel values of image blocks of the original captured image with the chromaticity coordinate values of image blocks of the multispectral image corresponding to the image blocks of the original captured image, based on the correspondences between the image blocks of the multispectral image and the image blocks of the original captured image; and determine the replaced original captured image as the processed image.

In some alternative embodiments, the apparatus is further configured to: acquire an initial multispectral image of the capturing scene; and obtain the multispectral image by performing spectral calibration and/or spectral reproduction on spectral information in a spectral distribution of the initial multispectral image.

In practice, the above acquiring module 51, determining module 52, and processing module 53 may be implemented by a processor located on the image processing apparatus, specifically a CPU, a microprocessor (MPU), a digital signal processor (DSP), or a field programmable gate array (FPGA), etc.

FIG. 6 is an exemplary schematic structural diagram of an electronic device provided by the embodiments of the disclosure. As illustrated in FIG. 6, the embodiments of the disclosure provide an electronic device 600. The electronic device 600 includes components as follows.

The electronic device 600 includes processor 61 and a storage medium 62 storing instructions executable by the processor 61. The storage medium 62 relies on the processor 61 to perform operations through a communication bus 63. When the instructions are executed by the processor 61, the image processing method according to the above one or more embodiments is executed.

It is notable that, in practice, various components in the computer device are coupled together through the communication bus 63. It may be understood that the communication bus 63 is used to enable connection and communication between these components. In addition to a data bus, the communication bus 63 further includes a power bus, a control bus, and a status signal bus.

The embodiments of the disclosure provide a computer storage medium storing executable instructions therein. When the executable instructions are executed by one or more processors, the one or more processors execute the image processing method according to the above one or more embodiments.

Specifically, the computer-readable storage medium may be a ferromagnetic random access memory (FRAM), a read-only memory (ROM), a programmable read-only memory (PROM), an erasable programmable read-only memory (EPROM), an electrically erasable programmable read-only memory (EEPROM), a flash memory, a magnetic surface memory, an optical disc, or a compact disc read-only memory (CD-ROM), etc.

Those skilled in the art should understand that embodiments may be provided as a method, a system, or a computer program product. Therefore, the disclosure may be implemented as a form of hardware-only embodiments, software-only embodiments, or embodiments with a combination of software and hardware. In addition, the disclosure may be implemented in a form of a computer program product, which is implemented on one or more computer-usable storage media (including but not limited to a disk memory, an optical memory, and the like) including computer-usable program codes.

The disclosure is described with reference to the flowcharts and/or block diagrams of the method, the device (system), and the computer program product according to the embodiments of the disclosure. It should be understood that computer program instructions may be used to implement each procedure and/or each block in the flowcharts and/or the block diagrams and a combination of the procedure and/or the block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a function in one or more procedures in the flowcharts and/or in one or more blocks in the block diagrams.

These computer program instructions may alternatively be stored in a computer-readable memory that can indicate a computer or another programmable data processing device to work in a particular manner, so that the instructions stored in the computer-readable memory generate an artifact that includes an instruction apparatus. The instruction apparatus implements a function in one or more procedures in the flowcharts and/or in one or more blocks in the block diagrams.

These computer program instructions may alternatively be loaded onto a computer or another programmable data processing device, so that a series of operations are performed on the computer or another programmable device to generate computer-implemented processing. Therefore, the instructions executed on the computer or another programmable device provide operations for implementing a function in one or more procedures in the flowcharts and/or in one or more blocks in the block diagrams.

The above description illustrates only some embodiments of the disclosure, and is not intended to limit the protection scope of the present disclosure.

## Claims

1. An image processing method, comprising:

   acquiring (S101) a multispectral image and an original captured image of a captured scene;
   determining (S102) chromaticity coordinate values of the multispectral image in a chromaticity coordinate system; and
   obtaining (S103) a processed image by performing correction processing on the original captured image, based on the chromaticity coordinate values of the multispectral image and correspondences between image blocks of the multispectral image and image blocks of the original captured image.

2. The image processing method as claimed in claim 1, wherein determining (S102) the chromaticity coordinate values of the multispectral image in the chromaticity coordinate system, comprises:

   obtaining spectral information from the multispectral image;
   obtaining a spectral distribution of the multispectral image by performing statistical analysis on the spectral information; and
   determining, based on the spectral distribution of the multispectral image, the chromaticity coordinate values of the multispectral image.

3. The image processing method as claimed in claim 2, wherein determining, based on the spectral distribution of the multispectral image, the chromaticity coordinate values of the multispectral image in the chromaticity coordinate system, comprises:
   inputting the spectral distribution of the multispectral image into a preset AI model, and outputting, from the AI model, the chromaticity coordinate values of the multispectral image.

4. The image processing method as claimed in claim 2 or claim 3, further comprising:

   correcting, using a preset color correction matrix, spectral information in the spectral distribution of the multispectral image, thereby obtaining a corrected spectral distribution of the multispectral image; and
   wherein determining, based on the spectral distribution of the multispectral image, the chromaticity coordinate values of the multispectral image, comprises:

determining, based on the corrected spectral distribution of the multispectral image, the chromaticity coordinate values of the multispectral image.

5. The image processing method as claimed in any one of claims 2 to 4, wherein obtaining the spectral information from the multispectral image, comprises:

obtaining a corrected multispectral image by performing radiometric correction on the multispectral image;
obtaining a cropped image by cropping the corrected multispectral image based on a boundary of a research area or a region of interest; and
segmenting the cropped image into a plurality of cells, and extracting spectral information of each of the plurality of cells, wherein the spectral information comprises a reflectivity or radiation intensity of each pixel on different spectral channels.

6. The image processing method as claimed in claim 2, wherein determining, based on the spectral distribution of the multispectral image, the chromaticity coordinate values of the multispectral image, comprises:

determining tristimulus values, based on the spectral distribution of the multispectral image and standard chromaticity functions; and
determining, based on the tristimulus values, the chromaticity coordinate values of the multispectral image in the chromaticity coordinate system.

7. The image processing method as claimed in any one of claims 1 to 6, further comprising:

determining, based on a spatial position relationship between a first camera and a second camera, correspondences between image blocks of an image obtained by the first camera and image blocks of an image obtained by the second camera; and
determining, based on the correspondences between the image blocks of the image obtained by the first camera and the image blocks of the image obtained by the second camera, image blocks of the original captured image corresponding to the image blocks of the multispectral image, thereby obtaining the correspondences between the image blocks of the multispectral image and the image blocks of the original captured image;
wherein the first camera is configured to capture the multispectral image, and the second camera is configured to capture the original captured image.

8. The image processing method as claimed in claim 7, wherein the correspondences between the image blocks of the multispectral image and the image blocks of the original captured image comprises:

a part of the image blocks of the multispectral image corresponds to a part of the image blocks of the original captured image; or
a part of the image blocks of the multispectral image corresponds to all the image blocks of the original captured image.

9. The image processing method as claimed in any one of claims 1 to 8, wherein obtaining (S103) the processed image by performing correction processing on the original captured image, based on the chromaticity coordinate values of the multispectral image and the correspondences between the image blocks of the multispectral image and the image blocks of the original captured image, comprises:

obtaining a replaced original captured image by replacing pixel values of image blocks of the original captured image with the chromaticity coordinates of image blocks of the multispectral image corresponding to the image blocks of the original captured image, based on the correspondences between the image blocks of the multispectral image and the image blocks of the original captured image; and
determining the replaced original captured image as the processed image.

10. The image processing method as claimed in claim 9, wherein obtaining the replaced original captured image by replacing the pixel values of image blocks of the original captured image with the chromaticity coordinates of image blocks of the multispectral image corresponding to the image blocks of the original captured image, based on the correspondences between the image blocks of the multispectral image and the image blocks of the original captured image, comprises:
obtaining the replaced original captured image by replacing pixel values of each of the image blocks of the original captured image with the chromaticity coordinates of a corresponding image block of the multispectral image, based on the correspondences in which each of the image blocks of the original captured image corresponds to a respective one of the image blocks of the multispectral image.

11. The image processing method as claimed in claim 9, wherein obtaining the replaced original captured image by replacing the pixel values of image blocks of the original captured image with the chromaticity coordinates of image blocks of the multispectral image corresponding to the image blocks of the original captured image, based on the correspondences between the image blocks of the multispectral image and the image blocks of the original captured image, comprises:

determining image blocks of the multispectral image whose chromaticity coordinate values meet a preset condition;

identifying image blocks of the original captured image that correspond to the determined image blocks of the multispectral image; and

obtaining the replaced original captured image by replacing the pixel values of identified image blocks of the original captured image with the chromaticity coordinates of the image blocks of the multispectral image corresponding to the identified image blocks of the original captured image, based on the correspondences between the image blocks of the multispectral image and the image blocks of the original captured image.

12. The image processing method as claimed in any one of claims 1 to 11, wherein acquiring the multispectral image of the captured scene, comprises:

acquiring an initial multispectral image of the captured scene; and

obtaining the multispectral image by performing spectral calibration and/or spectral reproduction on spectral information in a spectral distribution of the initial multispectral image.

13. The image processing method as claimed in any one of claims 1 to 12, wherein the multispectral image is captured by a multispectral camera that outputs values of 9 channels.

14. An electronic device (600), comprising: a processor (61) and a storage medium (62) storing instructions executable by the processor (61), wherein the storage medium (62) relies on the processor (61) to perform operations through a communication bus (63), and the instructions, when being executed by the processor (61), cause the image processing method as claimed in any one of claims 1 to 14 to be implemented.

15. A computer storage medium, wherein the computer storage medium stores executable instructions which, when being executed by one or more processors, cause the one or more processors to execute the image processing method according to any one of claims 1 to 13.

| | |
|---|---|
| a multispectral image and an original captured image of a captured scene are acquired | S101 |

| | |
|---|---|
| chromaticity coordinate values of the multispectral image in a chromaticity coordinate system are determined | S102 |

| | |
|---|---|
| a processed image is obtained by performing correction processing on the original captured image, based on the chromaticity coordinate values of the multispectral image and correspondences between image blocks of the multispectral image and image blocks of the original captured image | S103 |

FIG. 1

FIG. 2

FIG. 3

FIG. 4a

FIG. 4b

FIG. 4c

acquiring module — 51

determining module — 52

processing module — 53

FIG. 5

electronic device 600

63

storage medium — 62

processor — 61

FIG. 6

# EP 4 765 013 A1

| | Europäisches Patentamt / European Patent Office / Office européen des brevets | **EUROPEAN SEARCH REPORT** | **Application Number** EP 25 22 4638 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | CN 118 057 830 A (HUAWEI TECH CO LTD) 21 May 2024 (2024-05-21)<br>* the whole document * | 1,2,4,6,<br>12-15<br>7,8<br>3,5,9-11 | INV.<br>G06T5/50 |
| Y | CN 112 562 017 B (ORBBEC TECHNOLOGY GROUP CO LTD) 23 August 2024 (2024-08-23)<br>* paragraphs [0015], [0017] - [0024], [0065], [0090] - [0091] * | 7,8 | |
| A | Gonzalez Rafael C.: "Color Fundamentals" In: "Digital Image Processing", 1 January 2008 (2008-01-01), XP093386202,<br>* pages 398,399 * | 1 | |
| A | CN 104 902 153 A (BEIJING RES INST SPATIAL MECHANICAL & ELECTRICAL TECHNOLOGY) 9 September 2015 (2015-09-09)<br>* the whole document * | 1-15 | |
| A | CN 114 972 125 A (NAT ASTRONOMICAL OBSERVATORIES CAS) 30 August 2022 (2022-08-30)<br>* the whole document * | 1-15 | TECHNICAL FIELDS SEARCHED (IPC)<br><br>G06T |
| A | US 2014/002475 A1 (OH JUNG TEAK [KR]) 2 January 2014 (2014-01-02)<br>* the whole document * | 1-15 | |

The present search report has been drawn up for all claims

| Place of search | Date of completion of the search | Examiner |
|---|---|---|
| Munich | 10 April 2026 | Frias Velazquez, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4638

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2026

| Patent document cited in search report | | Publication date | Patent family member(s) | | Publication date |
|---|---|---|---|---|---|
| CN 118057830 | A | 21-05-2024 | CN | 118057830 A | 21-05-2024 |
| | | | WO | 2024103746 A1 | 23-05-2024 |
| CN 112562017 | B | 23-08-2024 | NONE | | |
| CN 104902153 | A | 09-09-2015 | NONE | | |
| CN 114972125 | A | 30-08-2022 | NONE | | |
| US 2014002475 | A1 | 02-01-2014 | CN | 103514584 A | 15-01-2014 |
| | | | EP | 2679159 A1 | 01-01-2014 |
| | | | KR | 20140001487 A | 07-01-2014 |
| | | | US | 2014002475 A1 | 02-01-2014 |

EPO FORM P0459

For more details about this annex : see Official Journal of the European Patent Office, No. 12/82